# EUROPÄISCHE PATENTANMELDUNG

(11) **EP 3 067 595 A1**
(43) Veröffentlichungstag der Anmeldung: **14.09.2016**
(21) Anmeldenummer: 16156638.5
(22) Anmeldetag: 22.02.2016
(51) Int. Cl.: F16K 1/20, F16K 5/04, F16K 5/18

(54) **VENTILEINHEIT**

(30) Priorität: 11.03.2015 DE 102015003055
(71) Anmelder: Murrplastik Produktionstechnik GmbH, 71570 Oppenweiler (DE)
(72) Erfinder:
(74) Vertreter: Patentanwälte Bregenzer und Reule Partnerschaftsgesellschaft mbB

(57) **Zusammenfassung**

Die Erfindung betrifft eine Ventileinheit (10, 110) zur Steuerung eines Fluidstroms, insbesondere zur Steuerung eines Flüssigkeitsstroms, mit einem Ventilgehäuse (12; 112), das mindestens eine Einlassöffnung (22, 24; 122, 124, 125) und mindestens eine Auslassöffnung (22, 24; 122, 124, 125) für das Fluid aufweist, wobei an jeder Auslassöffnung (22, 24; 122, 124, 125) ein mit einem um die Auslassöffnung (22, 24; 122, 124, 125) umlaufenden, vorzugsweise elastomeren Dichtelement (30; 130) versehener Dichtsitz (26, 28; 126, 128, 129) angeordnet ist, mit einem im Ventilgehäuse (12; 112) angeordneten, um eine Drehachse (40; 140) zwischen mindestens zwei Schaltstellungen verdrehbaren Schließelement (32; 132), welches eine konvexe Oberfläche (44;144) zur Anlage an dem Dichtelement (30; 130) bzw. an mindestens einem der Dichtelemente (30; 130) aufweist, wobei das Schließelement (32; 132) quer zur Drehachse (40; 140) zum Andrücken an das bzw. die Dichtelement(e) (30; 130) bezüglich des Ventilgehäuses (12, 112) begrenzt verschieblich angeordnet ist.

## Beschreibung

Die Erfindung betrifft eine Ventileinheit zur Steuerung eines Fluidstroms, insbesondere zur Steuerung eines Flüssigkeitsstroms, gemäß Oberbegriff des Anspruchs 1

Es sind Ventileinheiten bekannt, die ein kugelförmiges Schließelement aufweisen, das einen Durchgangskanal aufweist. Wird der Durchgangskanal parallel zu einer Durchflussrichtung gestellt, so befindet sich die Ventileinheit in einer Offen-Stellung, während der Durchgang durch die Ventileinheit gesperrt ist, wenn der Durchgangskanal quer zur Durchflussrichtung gestellt ist. Zu diesem Zweck ist das Schließelement verdrehbar in einem Ventilgehäuse aufgenommen. Es ist so in das Ventilgehäuse eingepasst, dass es nur die Drehbewegung ausführen kann, ansonsten aber bezüglich des Ventilgehäuses unbeweglich ist. Des weiteren sind Ventileinheiten der eingangs genannten Art bekannt, deren Schließelemente nicht die Form einer vollen Kugel aufweisen, sondern die Form eines Abschnitts einer Kugelschale (vgl. DE 44 16 039 C1). Solche Ventile sind oft aufwendig abzudichten.

Es ist Aufgabe der Erfindung, eine Ventileinheit der eingangs genannten Art derart weiterzubilden, dass sie einfacher und/oder günstiger zu fertigen ist.

Diese Aufgabe wird erfindungsgemäß durch eine Ventileinheit mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass das Schließelement bei einer begrenzten Verschieblichkeit in der Geschlossen-Stellung vom anstehenden Druck des Fluids gegen das am betreffenden Dichtsitz angeordnete Dichtelement gedrückt wird und somit eine bessere Abdichtung der Auslassöffnung erzielt wird. Aufgrund der Verschieblichkeit des Schließelements ist eine Vorspannung desselben, beispielsweise mittels einer Druckfeder, nicht nötig. Zudem nimmt die Kraft, mit der das Schließelement gegen den Dichtsitz gedrückt wird, beim Öffnen ab, so dass auch die Reibung zwischen dem Schließelement und dem Dichtsitz bzw. dem Dichtelement abnimmt. Dabei ist es möglich, dass eine oder mehrere Öffnungen ausschließlich als Einlassöffnung(en) und eine oder mehrere Öffnungen ausschließlich als Auslassöffnung(en) dienen. Es ist aber auch möglich, dass mindestens eine Einlassöffnung und vorzugsweise jede Einlassöffnung bei Umkehr der Strömungsrichtung des Fluids als Auslassöffnung dient, während eine Auslassöffnung und vorzugsweise jede Auslassöffnung ebenfalls als Einlassöffnung dienen kann. Dabei wird bevorzugt, dass zumindest an einer Einlassöffnung und vorzugsweise an jeder Einlassöffnung ein mit einem um die Einlassöffnung umlaufenden, vorzugsweise elastomeren Dichtelement versehener weiterer Dichtsitz angeordnet ist. Bei einer Strömungsumkehr des Fluids, wenn die vormalige Einlassöffnung als Auslassöffnung dient, drückt das anstehende Fluid in der Geschlossen-Stellung gegen das Dichtelement am weiteren Dichtsitz.

Die konvexe Oberfläche kann vorteilhaft ein Teil einer Kugelaußenfläche oder einer Zylindermantelaußenfläche sein. Zudem kann das Schließelement zweckmäßig eine der konvexen Oberfläche abgewandte konkave Oberfläche aufweisen, welche wiederum vorteilhaft ein Teil einer Kugelinnenfläche oder einer Zylindermantelinnenfläche sein kann, so dass das Schließelement zumindest abschnittsweise als Teil einer Kugelschale oder einer Zylindermantelschale ausgebildet ist.

Gemäß einer vorteilhaften Ausgestaltung der Erfindung verläuft die Drehachse durch eine am Ventilgehäuse unverschieblich angeordnete und gegenüber dem Ventilgehäuse drehbare Welle, wobei das Schließelement bezüglich der Welle verschieblich ist. Mittels der aus dem Ventilgehäuse ragenden Welle ist das Schließelement auf einfache und zuverlässige Weise verdrehbar, während die bezüglich des Ventilgehäuses drehbare, aber ansonsten nicht bewegliche Welle gut gegenüber dem Ventilgehäuse abgedichtet werden kann. Die Verschieblichkeit des Schließelements im Ventilgehäuse wird vorteilhaft dadurch erzielt, dass das Schließelement ein Langloch oder eine längliche Vertiefung aufweist, in dem bzw. in der ein in das Ventilgehäuse ragendes Ende der Welle verdrehfest verschieblich geführt ist. Eine Drehung der Welle überträgt sich dann zwangsläufig auf das Schließelement, so dass sich auch die Richtung, in der das Schließelement im Ventilgehäuse verschieblich ist, mitdreht. Wird das Schließelement von einer eine erste Auslassöffnung verschließenden ersten Stellung in eine eine zweite Auslassöffnung verschließende zweite Stellung gedreht, so drückt ein anstehender Fluiddruck das Schließelement gegen das Dichtelement am Dichtsitz an der zweiten Auslassöffnung.

Zweckmäßig liegt das Schließelement in jeder seiner möglichen Stellungen an mindestens einem Dichtelement an. Insbesondere bei der Ausbildung der Ventileinheit als 2/2-Wegeventil, bei dem das Schließelement einen Durchflusskanal in einer Geschlossen-Stellung sperrt und in einer Offen-Stellung freigibt und in der Geschlossen-Stellung zischen zwei im Abstand zueinander angeordneten, jeweils mit einem umlaufenden Dichtelement versehenen Dichtsitzen angeordnet ist, ist es vorteilhaft, wenn sich auch in der Offen-Stellung eine Partie des Schließelements zwischen den Dichtelementen befindet. Das Schließelement bewegt sich dann nie vollständig aus dem Zwischenraum zwischen den beiden Dichtelementen heraus, so dass es beim Zurückdrehen in die Geschlossen-Stellung auch nicht wieder in den Zwischenraum eingeführt werden muss und dabei die Dichtelemente beschädigen kann.

Im Folgenden wird die Erfindung anhand zweier in der Zeichnung schematisch dargestellter Ausführungsbeispiele näher erläutert. Es zeigen
Fig. 1a, 1 b eine als 2/2-Wegeventil ausgebildete Ventileinheit gemäß einem ersten Ausführungsbeispiel jeweils im Längsschnitt aus zwei verschiedenen, rechtwinklig zueinander stehenden Blickrichtungen;
Fig.2a, 2b das obere Teil des Ventilgehäuses gemäß Fig. 1a,1b im Längsschnitt mit dem Schließelement in der Geschlossen-Stellung und in der Offen-Stellung;
Fig. 3 das obere Teil des Ventilgehäuses gemäß Fig. 2b in perspektivischer Darstellung mit dem Schließelement in der Offen-Stellung;
Fig. 4 eine als 3/4-Wegeventil ausgebildete Ventileinheit gemäß einem zweiten Ausführungsbeispiel in Explosionsdarstellung und
Fig. 5a bis 5d eine schematisierte Schnittdarstellung der Ventileinheit gemäß Fig. 4 mit dem Schließelement in vier verschiedenen Stellungen.

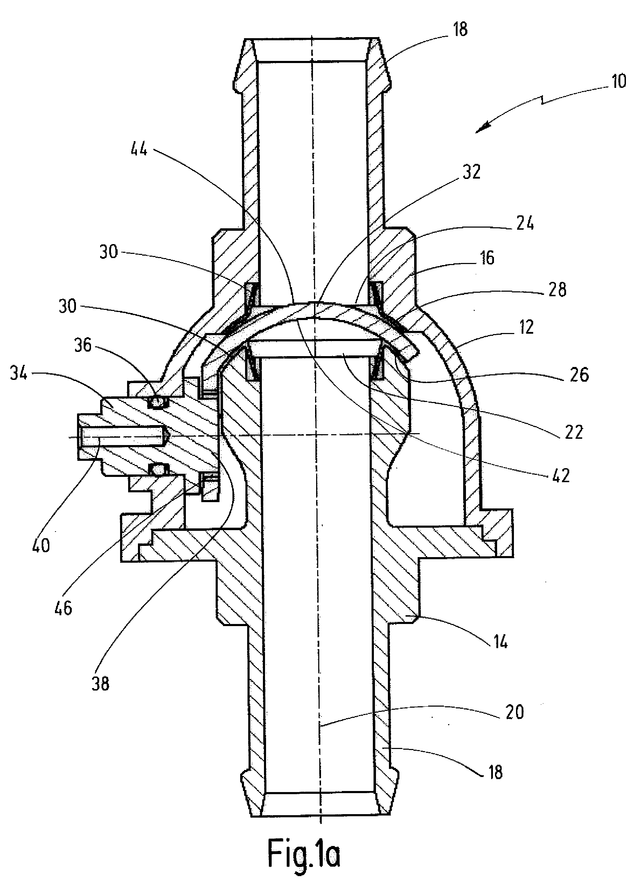

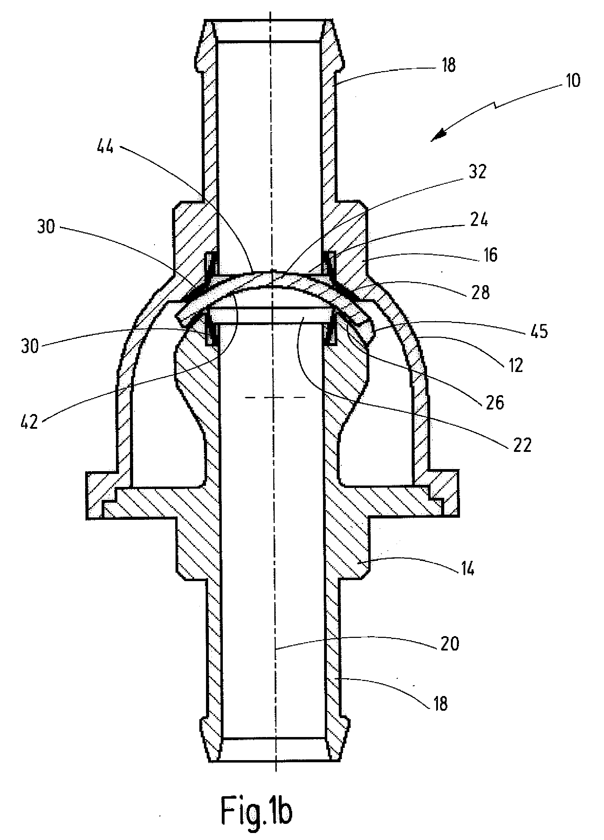

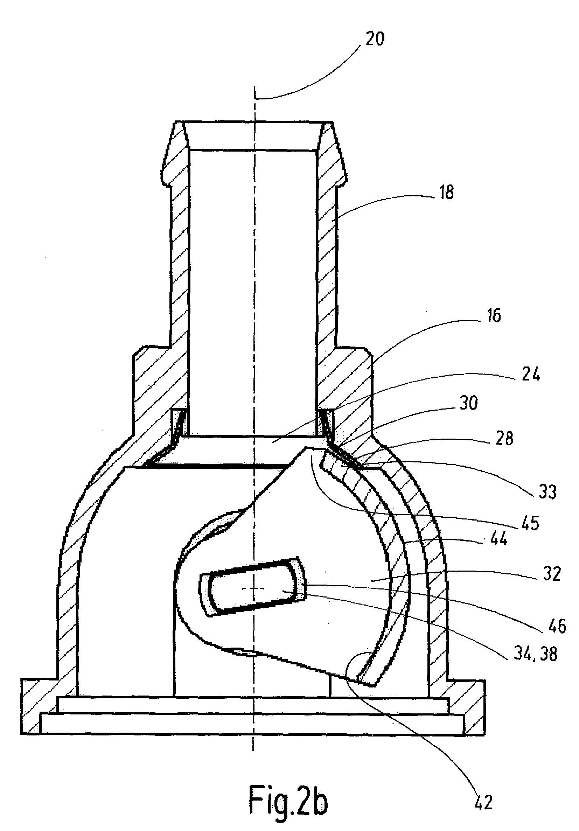

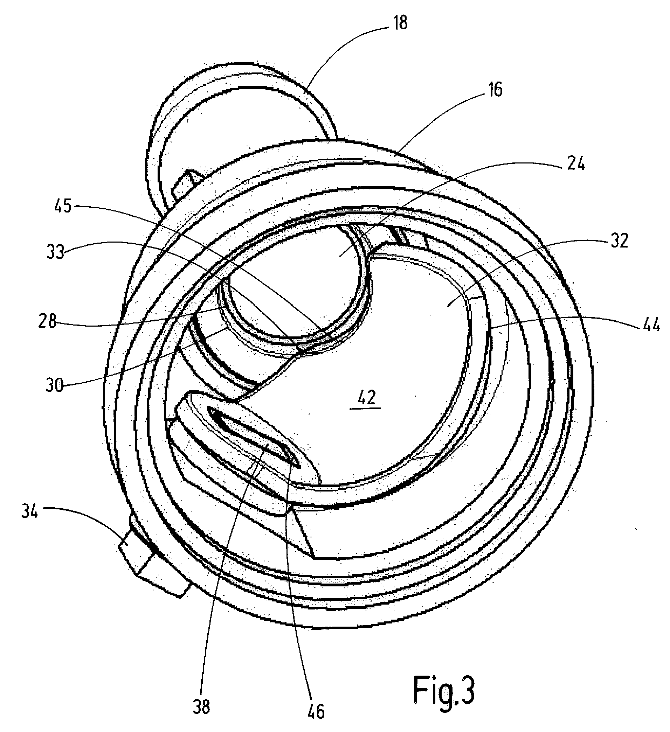

Die in Fig. 1a, 1 b im Längsschnitt gezeigte Ventileinheit 10 weist ein zweiteiliges Ventilgehäuse 12 auf, das aus den Gehäuseteilen 14, 16 zusammengesetzt ist. Jedes der Gehäuseteile 14, 16 weist einen Anschlussstutzen 18 auf, wobei die Anschlussstutzen 18 eine gemeinsame Längsmittelachse 20 aufweisen. Die Anschlussstutzen 18 führen jeweils zu einer Ein- und/oder Auslassöffnung, wobei eine erste Ein- und Auslassöffnung 22 im unteren Gehäuseteile 14, eine zweite Ein- und Auslassöffnung 24 im oberen Gehäuseteil 16 angeordnet ist und jeweils von einem Dichtsitz 26, 28 umrandet wird. Auf jedem Dichtsitz 26, 28 ist ein um die jeweilige Ein- und Auslassöffnung 22, 24 umlaufendes Dichtelement 30 angeordnet. Zum Sperren und Freigeben einer Verbindung zwischen der ersten Ein- und Auslassöffnung 22 und der zweiten Ein- und Auslassöffnung 24 ist ein Schließelement 32 im Ventilgehäuse 12 angeordnet, das mit einer Welle 34 verbunden ist, die mittels eines Dichtrings 36 abgedichtet durch das Ventilgehäuse 12 durchgeführt ist und aus diesem herausragt. An dem in das Ventilgehäuse 12 ragenden Ende 38 der Welle 34 ist diese drehfest mit dem Schließelement 32 verbunden, so dass ein Drehen der Welle 34 bezüglich des Ventilgehäuses 12 um eine Drehachse 40 ein Verdrehen des Schließelements 32 bewirkt. Durch Drehen der Welle 34 kann dieses von der in Fig. 1 a, 1 b, 2a gezeigten, die Verbindung zwischen der ersten Ein- und Auslassöffnung 22 und der zweiten Ein- und Auslassöffnung 24 verschließenden Geschlossen-Stellung in die in Fig. 2b, 3 gezeigte, die Verbindung freigebende Offen-Stellung bewegt werden, in der sich nur noch eine Randpartie 33 des Schließelements 32 zwischen den Dichtsitzen 26, 28 befindet.

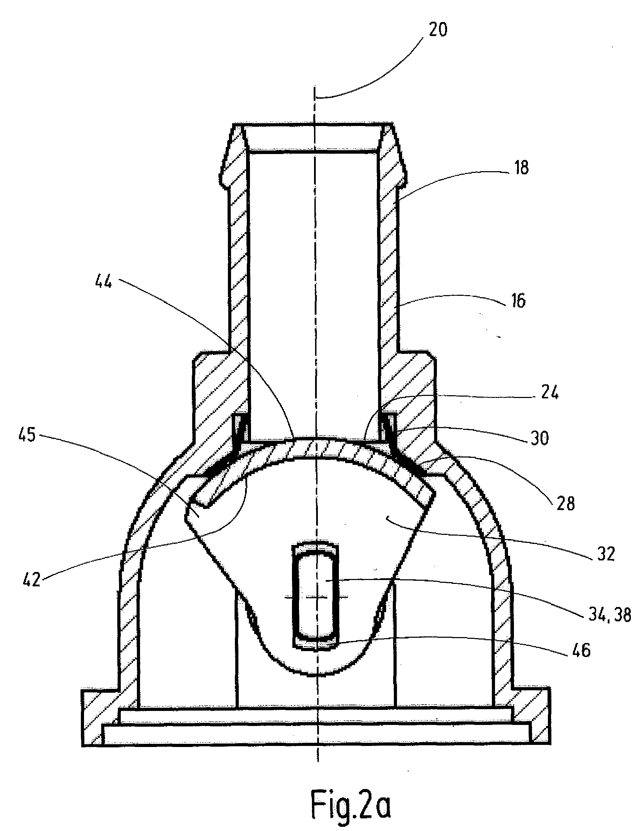

In der Geschlossen-Stellung befindet sich das Schließelement zwischen den beiden Dichtsitzen 26, 28 und zwischen den Dichtelementen 30. Das Schließelement 32 weist eine dem ersten Dichtsitz 26 zugewandte konkave Oberfläche auf, die zumindest abschnittsweise einem Teil einer Kugelinnenfläche entspricht. Es weist zudem eine der konkaven Oberfläche 42 abgewandte konvexe Oberfläche 44 auf, die zumindest abschnittsweise dem Teil einer Kugelaußenfläche entspricht und ist somit etwa löffelförmig ausgebildet. Alternativ wäre auch eine Ausgestaltung der Oberflächen 42, 44 als Teile von Zylindermantelinnen- bzw. Zylindermantelaußenflächen denkbar, wobei sich die Zylinderachse in der Darstellung gemäß Fig. 2a, 2b senkrecht zur Zeichenebene erstreckt. In beiden Fällen überspannt das Schließelement 32 in der Drehrichtung einen Winkelbereich von weniger als 180°, im gezeigten Ausführungsbeispiel von etwas weniger als von 90°. Zudem weist es an der in der Offen-Stellung dem Dichtsitz 28 zugewandten Randpartie 33 eine randoffene, ungefähr sichelförmige Ausnehmung 45 auf, deren Form an die runde Form der Ein- und Auslassöffnungen 22, 24 angepasst ist, so dass die Randpartie 33 nicht in die Ein- und Auslassöffnungen 22, 24 ragt.

Das Schließelement 32 weist ein Langloch 46 auf, das in das das Ende 38 der Welle 34 eingreift. Das Langloch 46 weist eine Breite auf, die der Breite des Wellenendes 38 entspricht, welches etwa quaderförmig und im Querschnitt (vgl. Fig. 2a, 2b) annähernd rechteckförmig ausgebildet ist. Die Länge des Langlochs 46 ist aber etwas größer als die Länge des Wellenendes 38, so dass das Schließelement 32 bezüglich der Welle 34 in einer Richtung senkrecht zur Drehachse 40 begrenzt verschieblich ist. Ist das Schließelement 32 in der Geschlossen-Stellung und liegt beispielsweise in der Darstellung gemäß Fig. 1a, 1 b von unten ein Druck an, so wird die konvexe Oberfläche 44 gegen das Dichtelement 30 am oberen Dichtsitz 28 gedrückt, so dass eine bessere Dichtwirkung erzielt wird. Liegt umgekehrt ein Druck von oben an, so wird die konkave Oberfläche 42 auf das Dichtelement 30 am unteren Dichtsitz 26 gedrückt.

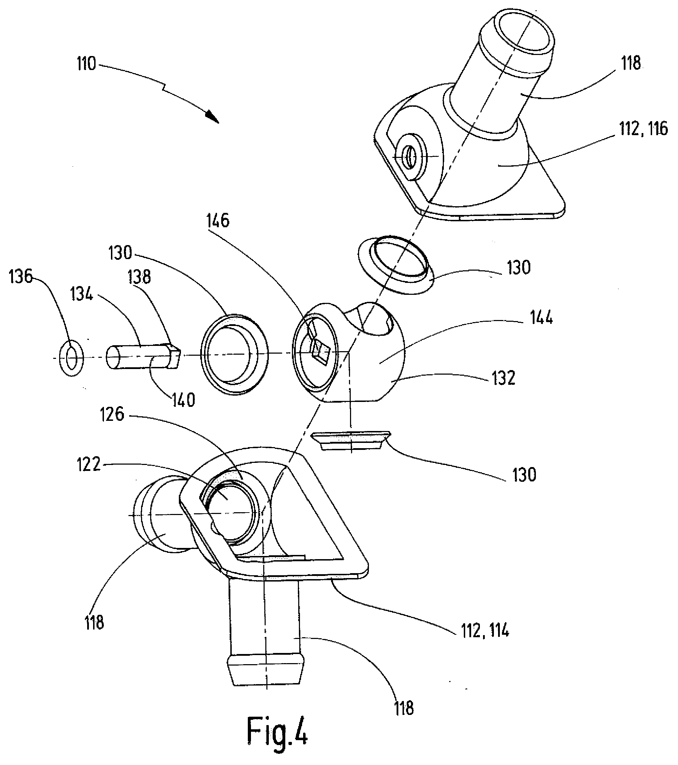

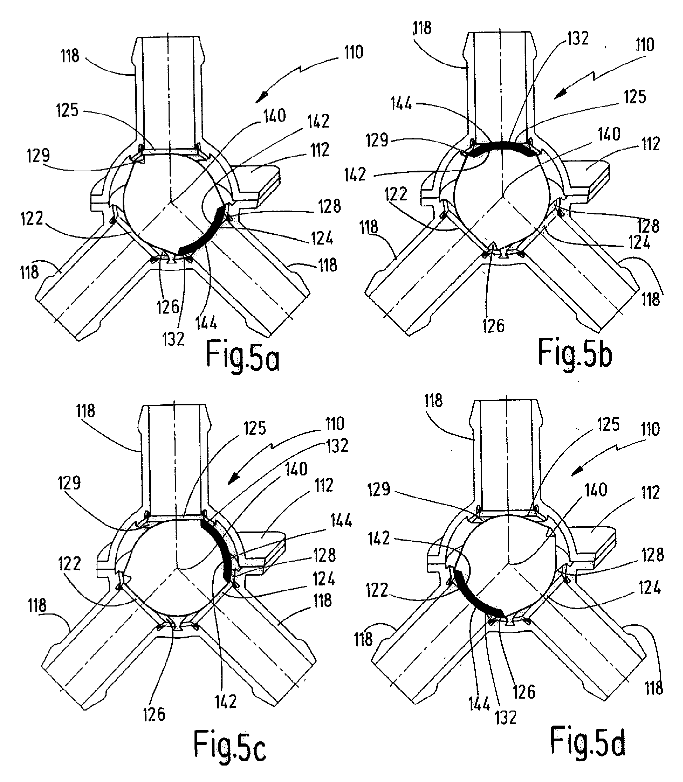

Während die Ventileinheit 10 gemäß dem ersten Ausführungsbeispiel als 2/2-Wegeventil ausgebildet ist, handelt es sich bei der Ventileinheit 110 gemäß dem zweiten Ausführungsbeispiel (Fig. 4, 5) um ein 3/4-Wegeventil. Auch diese Ventileinheit 110 weist ein Ventilgehäuse 112 mit zwei Gehäuseteilen 114, 116 auf, in dem ein Schließelement 132 mit einer als Teil einer Kugelinnenfläche ausgebildeten konkaven Oberfläche 142 und einer dieser abgewandten, als Teil einer Kugelaußenfläche ausgebildeten konvexen Oberfläche 144. Durch das Gehäuse 112 ist eine Welle 134 durchgeführt, die verdrehfest mit dem Schließelement 132 verbunden ist und aus dem Gehäuse 112 herausragt sowie gegenüber diesem mittels eines Dichtrings 136 abgedichtet ist. Die Welle 134 ist gegenüber dem Ventilgehäuse 112 um eine Drehachse 140 drehbar, aber ansonsten unbeweglich. Das Ende 138 der Welle 134 ist wiederum annähernd quaderförmig und greift in ein Langloch 146 im Schließelement 132 ein, so dass das Schließelement 132 bezüglich der Welle 134 wie beim ersten Ausführungsbeispiel senkrecht zur Drehachse 140 begrenzt verschieblich ist.

Das Ventilgehäuse 112 weist drei Anschlussstutzen 118 auf, die jeweils zu einer von einem Dichtsitz 126, 128, 129 umrandeten Ein- und Auslassöffnung 122, 124, 125 führen, wobei wiederum jeder der Dichtsitze 126, 128, 129 mit einem umlaufenden Dichtelement 130 versehen ist.

Durch Verdrehen des Schließelements 132 im Ventilgehäuse 112 ist dieses wie in Fig. 5a bis 5d gezeigt im wesentlichen zwischen vier Schaltstellungen beweglich. In drei der vier Schaltstellungen (Fig. 5a, 5b, 5d) ist jeweils eine der Ein- und Auslassöffnungen 122, 124, 125 verschlossen, während die anderen beiden miteinander kommunizieren, wobei dann eine als Einlassöffnung, die andere als Auslassöffnung dient. Der anstehende Druck des durchgeleiteten Fluids, beispielsweise Wasser, verschiebt das Schließelement 132 bezüglich der Welle 134 und drückt es, wie auch beim ersten Ausführungsbeispiel, ohne zusätzliche Mittel wie beispielsweise Federn, selbsttätig gegen das umlaufende Dichtelement 130 am jeweiligen Dichtsitz 126, 128, 129. In einer vierten Schaltstellung (Fig. 5c) sind alle drei Ein- und Auslassöffnungen 122, 124, 125 geöffnet und kommunizieren miteinander. Wie schon beim ersten Ausführungsbeispiel überspannt das Schließelement 132 in der Drehrichtung einen Winkel von weniger als 90°.

In den Ausführungsbeispielen ist die erfindungsgemäße Ventileinheit als 2/2-Wegeventil 10 und als 3/4-Wegeventil 110 gezeigt. Es versteht sich von selbst, dass die Erfindung auch andere Ventile, insbesondere 3/2-Wegeventile und 3/3-Wegeventile, umfasst.

Zusammenfassend ist folgendes festzuhalten: Die Erfindung betrifft eine Ventileinheit 10, 110 zur Steuerung eines Fluidstroms, insbesondere zur Steuerung eines Flüssigkeitsstroms, mit einem Ventilgehäuse 12; 112, das mindestens eine Einlassöffnung 22, 24; 122, 124, 125 und mindestens eine Auslassöffnung 22, 24; 122, 124, 125 für das Fluid aufweist, wobei an jeder Auslassöffnung 22, 24; 122, 124, 125 ein mit einem um die Auslassöffnung 22, 24; 122, 124, 125 umlaufenden, vorzugsweise elastomeren Dichtelement 30; 130 versehener Dichtsitz 26, 28; 126, 128, 129 angeordnet ist, mit einem im Ventilgehäuse 12; 112 angeordneten, um eine Drehachse 40; 140 zwischen mindestens zwei Schaltstellungen verdrehbaren Schließelement 32; 132, welches eine konvexe Oberfläche 44; 144 zur Anlage an dem Dichtelement 30; 130 bzw. an mindestens einem der Dichtelemente 30; 130 aufweist, wobei das Schließelement 32; 132 quer zur Drehachse 40; 140 zum Andrücken an das bzw. die Dichtelement(e) 30; 130 bezüglich des Ventilgehäuses 12, 112 begrenzt verschieblich angeordnet ist.

## Patentansprüche

1. Ventileinheit zur Steuerung eines Fluidstroms, insbesondere zur Steuerung eines Flüssigkeitsstroms, mit einem Ventilgehäuse (12; 112), das mindestens eine Einlassöffnung (22, 24; 122, 124, 125) und mindestens eine Auslassöffnung (22, 24; 122, 124, 125) für das Fluid aufweist, wobei an jeder Auslassöffnung (22, 24; 122, 124, 125) ein mit einem um die Auslassöffnung (22, 24; 122, 124, 125) umlaufenden, vorzugsweise elastomeren Dichtelement (30; 130) versehener Dichtsitz (26, 28; 126, 128, 129) angeordnet ist, und mit einem im Ventilgehäuse (12; 112) angeordneten, um eine Drehachse (40; 140) zwischen mindestens zwei Schaltstellungen verdrehbaren Schließelement (32; 132), welches eine konvexe Oberfläche (44;144) zur Anlage an dem Dichtelement (30; 130) bzw. an mindestens einem der Dichtelemente (30; 130) aufweist, **dadurch gekennzeichnet, dass** das Schließelement (32; 132) quer zur Drehachse (40; 140) zum Andrücken an das bzw. die Dichtelement(e) (30; 130) bezüglich des Ventilgehäuses (12, 112) begrenzt verschieblich angeordnet ist.

2. Ventileinheit nach Anspruch 1, **dadurch gekennzeichnet, dass** zumindest an einer Einlassöffnung (22, 24; 122, 124, 125) ein mit einem um die Einlassöffnung (22, 24; 122, 124, 125) umlaufenden, vorzugsweise elastomeren Dichtelement (30; 130) versehener weiterer Dichtsitz (26, 28; 126, 128, 129) angeordnet ist.

3. Ventileinheit nach Anspruch 1 oder 2, **dadurch gekennzeichnet, dass** die konvexe Oberfläche (44; 144) ein Teil einer Kugelaußenfläche oder einer Zylindermantelaußenfläche ist.

4. Ventileinheit nach einem der vorangehenden Ansprüche, **dadurch gekennzeichnet, dass** das Schließelement (32; 132) eine der konvexen Oberfläche (44; 144) abgewandte konkave Oberfläche (42; 142) aufweist.

5. Ventileinheit nach Anspruch 4, **dadurch gekennzeichnet, dass** die konkave Oberfläche (42; 142) ein Teil einer Kugelinnenfläche oder einer Zylindermantelinnenfläche ist.

6. Ventileinheit nach einem der vorangehenden Ansprüche, **dadurch gekennzeichnet, dass** die Drehachse (40; 140) durch eine am Ventilgehäuse (12; 112) unverschieblich angeordnete, gegenüber dem Ventilgehäuse (12; 112) drehbare Welle (34; 134) verläuft, gegen die das Schließelement (32; 132) verschieblich ist.

7. Ventileinheit nach Anspruch 6, **dadurch gekennzeichnet, dass** das Schließelement (32; 132) ein Langloch (46; 146) oder eine längliche Vertiefung aufweist, in dem bzw. in der ein in das Ventilgehäuse (12; 112) ragendes Ende (38; 138) der Welle (34;134) verdrehfest verschieblich geführt ist.

8. Ventileinheit nach einem der vorangehenden Ansprüche, **dadurch gekennzeichnet, dass** das Schließelement (32;132) in jeder seiner möglichen Stellungen an mindestens einem Dichtelement (30; 130) anliegt.

9. Ventileinheit nach einem der vorangehenden Ansprüche, **dadurch gekennzeichnet, dass** sie als 2/2-Wegeventil ausgebildet ist, wobei das Schließelement (32) einen Durchflusskanal in einer Geschlossen-Stellung sperrt und in einer Offen-Stellung freigibt und in der Geschlossen-Stellung zwischen zwei im Abstand zueinander angeordneten, jeweils mit einem umlaufenden Dichtelement (30) versehenen Dichtsitzen (26, 28) angeordnet ist, und wobei sich eine Partie (33) des Schließelements (32) in der Offen-Stellung zwischen den Dichtelementen (30) befindet
